# EUROPEAN PATENT APPLICATION

(11) **EP 4 742 485 A1**
(43) Date of publication of application: **13.05.2026**
(21) Application number: 24839959.4
(22) Date of filing: 01.07.2024
(51) Int. Cl.: H02J 3/36, H02J 3/38, H02M 1/12, H02M 7/483, H02M 7/493, H02M 7/757

(54) **HVDC SYSTEM**

(30) Priority: 07.07.2023 KR 20230088429
(71) Applicant: Hyosung Heavy Industries Corporation, Seoul 04144 (KR)
(72) Inventor: KU, Nam Joon, Changwon-si, Gyeongsangnam-do 51529 (KR); PARK, Hong Bean, Changwon-si, Gyeongsangnam-do 51529 (KR); LEE, Doo Young, Changwon-si, Gyeongsangnam-do 51529 (KR); JUNG, Hong Ju, Changwon-si, Gyeongsangnam-do 51529 (KR); PARK, Seong Won, Changwon-si, Gyeongsangnam-do 51529 (KR)
(74) Representative: Viering, Jentschura & Partner mbB Patent- und Rechtsanwälte
(86) International application number: PCT/KR2024/009159
(87) International publication number: WO 2025/014145

(57) **Abstract**

Proposed is a High Voltage Direct Current (HVDC) system in which a DC terminal of a Modular Multilevel Converter (MMC) is formed into a bipolar structure. The HVDC system includes a first transformer having a primary side connected to an AC grid side, a power transmission line connected to a secondary side of the first transformer, an MMC connected to the secondary side of the first transformer through the power transmission line, a positive terminal (P) and a negative terminal (N) formed at a DC terminal of the MMC, a second transformer connected to the power transmission line, and a ground terminal (G) connected to a neutral point of the second transformer and to a ground (GND). Furthermore, the DC terminal of the MMC forms a bipolar structure by the positive terminal (P), the negative terminal (N), and the ground terminal (G).

## Description

### Technical Field

The present disclosure relates to a High Voltage Direct Current (HVDC) system. More particularly, the present disclosure relates to an HVDC system in which a DC terminal of a Modular Multilevel Converter (MMC) constituting the HVDC system has a bipolar structure.

### Background Art

Generally, a High Voltage Direct Current (HVDC) system converts an alternating current produced at a power plant into a direct current and transmits the direct current, and reconverts the direct current into an alternating current at a power reception terminal to supply power to a load.

Such an HVDC system can efficiently and economically transmit power, connect different systems, and transmit power a long distance with high efficiency by stepping up a voltage.

In the HVDC system, a Modular Multilevel Converter (MMC) may be connected for power transmission and reactive power compensation.

The MMC includes a plurality of submodules connected in series, and is a power converter capable of outputting a direct current voltage from an alternating current voltage according to switching operations of a plurality of switches (e.g., IGBTs) provided in the submodules.

In a conventional general HVDC MMC, a method in which a secondary side of a transformer is delta-connected (Δ) so as to separate an AC side and a DC side is applied. However, in this case, there is a problem that voltage imbalance may occur on the DC side, and there is a problem that an overvoltage occurs at a DC terminal when a ground fault occurs on the DC side.

In order to solve such problems, conventionally, a secondary side of the transformer and an AC side of a converter are grounded. For example, a zig-zag transformer is used between the AC side and the MMC.

As an example, in Korean Patent Application Publication No. 10-2020-0007164, an HVDC system in which a zig-zag transformer is connected to a delta-connection (Δ) at a secondary side of an HVDC transformer so as to form a neutral point is proposed.

As another example, in Korean Patent No. 10-2502391, an HVDC system in which a zig-zag transformer connected such that a neutral point is formed on a power transmission line between an AC side and an MMC is proposed.

In the above prior patents and related art, a DC terminal of an MMC has a monopolar structure. Such a monopolar structure supplies a common direct current voltage to a positive pole and a negative pole, and has a simple structure, thereby facilitating control.

However, since entire power is blocked when an accident occurs at a DC terminal, there is a disadvantage in that power supply reliability is low.

### Disclosure

### Technical Problem

Accordingly, an objective of the present disclosure is to provide a High Voltage Direct Current (HVDC) system in which a DC terminal of a Modular Multilevel Converter (MMC) connected to the HVDC system is implemented in a bipolar structure.

Another objective of the present disclosure is to provide an HVDC system in which a zig-zag transformer is connected to a power transmission line between an AC side and an MMC in the HVDC system such that outputs of two poles at the DC terminal of the MMC are capable of being independently controlled.

### Technical Solution

According to an aspect of the present disclosure, there is provided an HVDC system including: a first transformer having a primary side connected to an AC grid side; a power transmission line connected to a secondary side of the first transformer; an MMC connected to the secondary side of the first transformer through the power transmission line; a positive terminal (P) and a negative terminal (N) formed at a DC terminal of the MMC; a second transformer connected to the power transmission line; and a ground terminal (G) connected to a neutral point of the second transformer and to a ground (GND), wherein the DC terminal of the MMC forms a bipolar structure by the positive terminal (P), the negative terminal (N), and the ground terminal (G).

In the present disclosure, the second transformer may include a zig-zag transformer.

In the present disclosure, the MMC may include an upper arm and a lower arm, and each of the upper arm and the lower arm may include a plurality of submodules connected in series.

In the present disclosure, an on/off duty ratio of each switching unit of the submodules of the upper arm and an on/off duty ratio of each switching unit of the submodules of the lower arm may be independently adjusted.

In the present disclosure, the neutral point of the second transformer may be directly connected to the ground (GND).

### Advantageous Effects

According to the HVDC system according to an embodiment of the present disclosure, there are effects as follows.

According to the present disclosure, by forming the DC terminal of the MMC connected to the HVDC system in the bipolar structure, outputs of the two poles are capable of being independently controlled.

According to the present disclosure, since the DC terminal of the MMC is capable of being independently controlled in the HVDC system, a stable response is capable of being realized when an accident occurs at the DC side.

According to the present disclosure, in the HVDC system, it becomes possible to cope with different load levels for two poles at the DC terminal of the MMC.

### Description of Drawings

FIG. 1 is a configuration diagram schematically illustrating a High Voltage Direct Current (HVDC) system according to an embodiment of the present disclosure.
FIG. 2 is a configuration diagram illustrating a submodule of a Modular Multilevel Converter (MMC) connected to the HVDC system according to an embodiment of the present disclosure.
FIG. 3 to FIG. 7 are views illustrating current flow in the MMC in the HVDC system according to an embodiment of the present disclosure.

### Mode for Invention

Hereinafter, embodiments of the present disclosure will be described in detail through exemplary drawings. In adding reference numerals to components throughout the drawings, it is to be noted that like or similar reference numerals designate like or similar components even though the components are illustrated in different drawings. In addition, in describing embodiments of the present disclosure, when it is determined that a detailed description of a related known configuration or function may obscure the gist of the present disclosure, the detailed description thereof will be omitted.

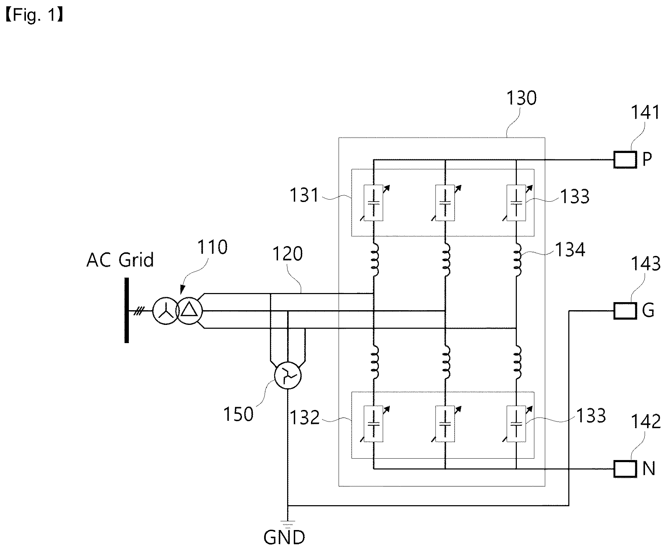

FIG. 1 is a configuration diagram schematically illustrating an HVDC system according to an embodiment of the present disclosure.

Referring to FIG. 1, in the HVDC system according to the present disclosure, a first transformer 110 is connected to an AC grid, and the first transformer 110 is connected to a Modular Multilevel Converter (MMC) 130 through a power transmission line 120.

The first transformer 110 is configured in a Y-Δ connection, and includes a Y-connection on a primary side and a Δ-connection on a secondary side. An AC grid side is connected to the Y-connection, and the power transmission line 120 is connected to the Δ-connection.

The first transformer 110 receives power at the primary side and outputs the power to the secondary side by stepping up or stepping down a voltage. In addition, the first transformer 110 may receive power at the secondary side and output the power to the primary side by stepping up or stepping down a voltage.

The MMC 130 is connected to the secondary side of the first transformer 110 through the power transmission line 120.

The power transmission line 120 may include a direct current transmission line for transmitting direct current and/or an alternating current transmission line for transmitting alternating current.

The power transmission line 120 may transmit power output from the first transformer 110 to the MMC 130. Conversely, the power transmission line 120 may transmit power output from the MMC 130 to the first transformer 110.

The MMC 130 includes a plurality of upper and lower arms 131 and 132, and each of the arms 131 and 132 includes a plurality of submodules 133 connected in series.

Each submodule 133 includes a switching unit therein, and the switching unit is configured to convert AC power into DC power or to convert DC power into AC power by a switching operation of the switching unit. The switching operation of the switching unit may be controlled by a controller (not shown) .

A reactor 134 is connected in series to the series connection of the submodules 133.

A second transformer 150 is connected to the power transmission line 120. That is, the second transformer 150 is connected to the Δ-connection at the secondary side of the first transformer 110.

The second transformer 150 may be a zig-zag transformer in which a zig-zag connection configuration is applied. A neutral point of the zig-zag transformer is connected to a ground GND.

Here, the neutral point of the zig-zag transformer and the ground GND are directly connected to each other without connection of another component between the neutral point and the ground GND.

In this case, the second transformer 150 may be a grounding transformer for removing harmonic currents.

Such a zig-zag transformer enables formation of a neutral point in a power system or a power transmission line connected to the power system when the neutral point cannot be formed in the power system.

The second transformer 150 provides a neutral point for DC power input to the MMC 130 and, conversely, converts AC power input to the MMC 130 into a DC voltage and outputs the DC voltage.

Three terminals 141, 142, and 143 are formed at a DC terminal of the MMC 130.

A positive terminal P 141 for inputting and outputting a positive DC voltage is formed at the submodule 133 of the upper arm 131, a negative terminal N 142 for inputting and outputting a negative DC voltage is formed at the submodule 133 of the lower arm 132, and a ground terminal G 143 connected to ground GND is provided.

In the MMC 130, the submodules 133 of the upper arm 131 receive AC power, convert the AC power into a positive DC power, and output the positive DC power to the positive terminal 141. Furthermore, the submodules 133 of the lower arm 132 receive AC power, convert the AC power into a negative DC power, and output the negative DC power to the negative terminal 142.

The ground terminal 143 connected to the neutral point of the zig-zag transformer 150 serves as a neutral terminal for the positive terminal 141 and the negative terminal 142. That is, the ground terminal 143 serves as ground for the positive DC power at the positive terminal 141 and the negative DC power at the negative terminal 142. Accordingly, the MMC 130 forms a bipolar structure by including the positive terminal 141, the negative terminal 142, and the ground terminal 143.

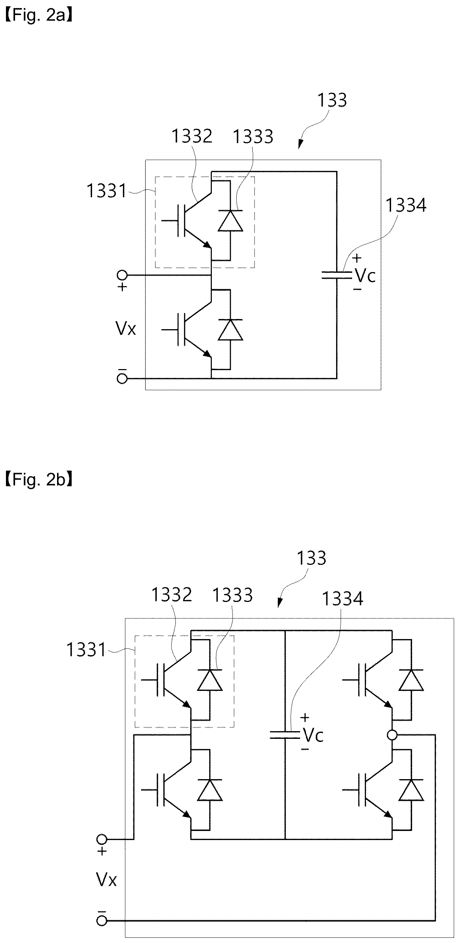

FIG. 2a and FIG. 2b are configuration diagrams of the submodule of the MMC according to an embodiment of the present disclosure.

FIG. 2a is a view illustrating an example in which the submodule 133 is configured as a half-bridge circuit, and FIG. 2b is a view illustrating an example in which the submodule 133 is configured as a full-bridge circuit.

Referring to FIG. 2a, the submodule 133 according to the present disclosure includes a pair of switching units 1331 and a capacitor 1334 connected in parallel with the switching units 1331.

Referring to FIG. 2b, the submodule 133 according to the present disclosure includes two pairs of switching units 1331 connected in parallel with each other, and includes the capacitor 1334 connected in parallel with the switching units 1331.

Each switching unit 1331 in FIG. 2a and FIG. 2b includes a power semiconductor device 1332 and a diode 1333 connected in antiparallel with the power semiconductor device 1332.

Each switching unit 1331 is configured to perform a switching operation according to a control signal of the controller (not shown), thereby conducting or blocking a current.

By the switching operation of each switching unit 1331, AC power is converted into DC power or, conversely, DC power is converted into AC power.

Particularly, in the submodules 133 of the upper arm 131 and the submodules 133 of the lower arm 132, a magnitude of power output to the positive terminal 141 and the negative terminal 142 may be determined according to the switching operations of the switching units 1331.

Power output of the MMC according to the switching operations of the switching units 1331 by the controller will be described in detail below.

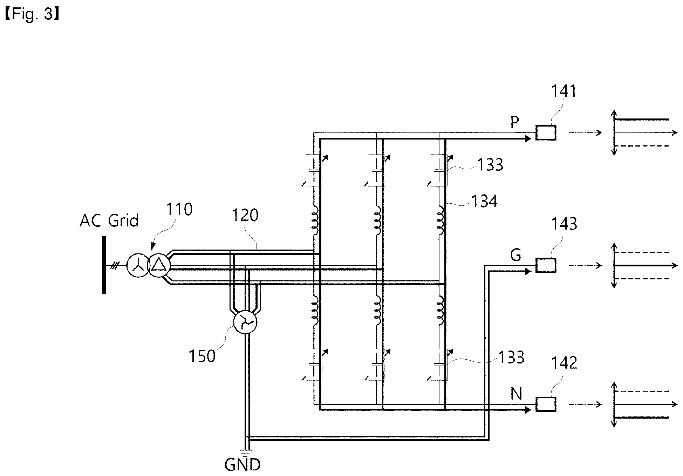

FIG. 3 to FIG. 5 are state views illustrating current flow in the MMC according to an embodiment of the present disclosure.

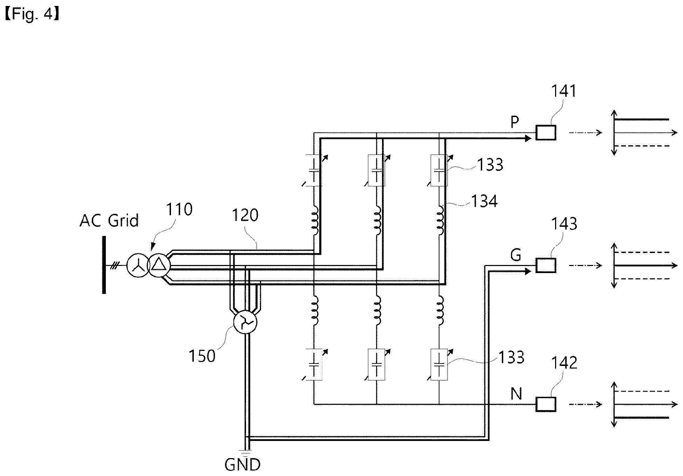

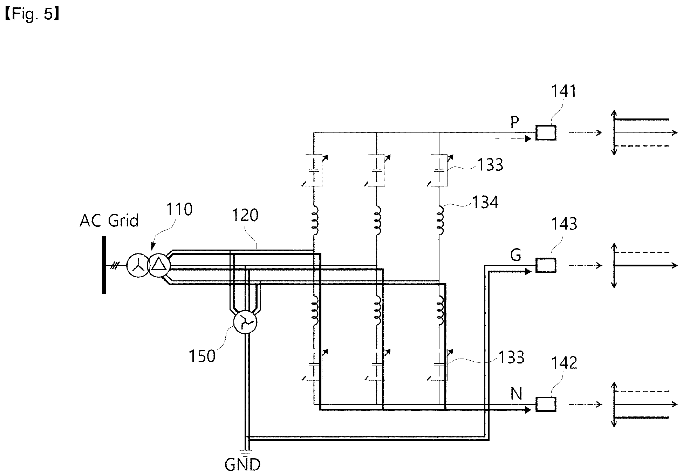

FIG. 3 is a state view illustrating current flow according to a simultaneous operation of the positive terminal 141 and the negative terminal 142 in the MMC 130 according to the present disclosure, FIG. 4 is a state view illustrating current flow according to an operation of only the positive terminal 141 in the MMC 130 according to the present disclosure, and FIG. 5 is a state view illustrating current flow according to an operation of only the negative terminal 142 in the MMC 130 according to the present disclosure.

Hereinafter, current flow according to switching operations of the switching units 1331 of the submodules 133 in the MMC 130 will be described with reference to FIG. 3 to FIG. 5.

Output at the DC terminal of the MMC 130 is determined according to the switching operations of the switching units 1331 of the submodules 133.

FIG. 3 is a view illustrating an example in which the switching units 1331 of the submodules 133 of the upper arm 131 and the switching units 1331 of the submodules 133 of the lower arm 132 are switched in the same manner so that the same current flows through the positive terminal 141 and the negative terminal 142 and the same power is output.

That is, in order to output DC power having opposite polarities and the same magnitude to the positive terminal 141 and the negative terminal 142, the switching units 1331 of the submodules 133 of the upper arm 131 and the switching units 1331 of the submodules 133 of the lower arm 132 are switched with the same duty ratio. Here, a voltage of 0 V is output to the ground terminal 143 serving as a neutral terminal.

Accordingly, a positive DC voltage is output through the positive terminal 141 and the ground terminal 143, and a negative DC voltage is output through the negative terminal 142 and the ground terminal 143. As a result, two voltages are output through the DC terminals having the bipolar structure.

FIG. 4 is a view illustrating an example in which only the switching units 1331 of the submodules 133 of the upper arm 131 are operated and the switching units 1331 of the submodules 133 of the lower arm 132 are in a blocked state so that current flows only through the positive terminal 141 and positive power is output.

That is, the switching units 1331 of the submodules 133 of the upper arm 131 perform switching operations so that power is output only to the positive terminal 141, and the switching units 1331 of the submodules 133 of the lower arm 132 are turned off.

Accordingly, a positive DC voltage is output through the positive terminal 141 and the ground terminal 143, and a negative DC voltage is applied between the negative terminal 142 and the ground terminal 143. However, since the switching units 1331 of the submodules 133 of the lower arm 132 are in the turned off state, no current flows through the negative terminal 142. As a result, in the bipolar structure of the MMC 130, only positive DC power is capable of being output at the DC terminal of the MMC 130.

FIG. 5 is a view illustrating an example in which the switching units 1331 of the submodules 133 of the upper arm 131 are in the turned off state and the switching units 1331 of the submodules 133 of the lower arm 132 are operated so that current flows only through the negative terminal 142 and negative power is output.

That is, in order to output power only to the negative terminal 142, the switching units 1331 of the submodules 133 of the upper arm 131 are turned off, and only the switching units 1331 of the submodules 133 of the lower arm 132 perform switching operations.

Accordingly, a negative DC voltage is output through the negative terminal 142 and the ground terminal 143, and a positive DC voltage is applied between the positive terminal 141 and the ground terminal 143. However, since the switching units 1331 of the submodules 133 of the upper arm 131 are in the turned off state, no current flows through the positive terminal 141. As a result, in the bipolar structure of the MMC 130, only negative DC power is capable of being output at the DC terminal of the MMC 130.

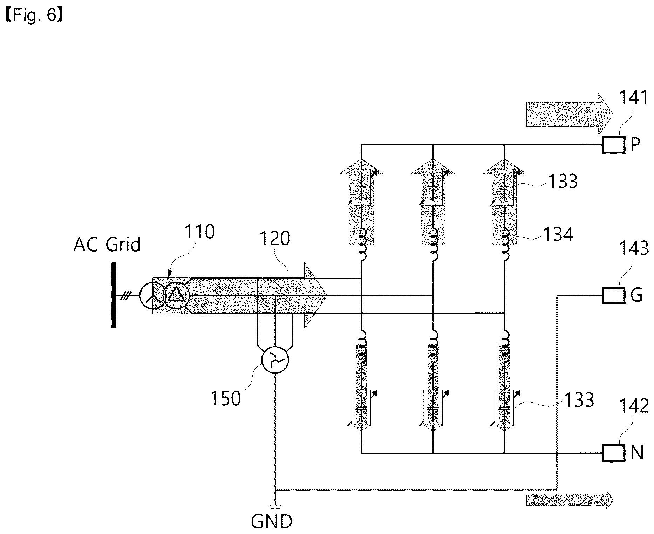

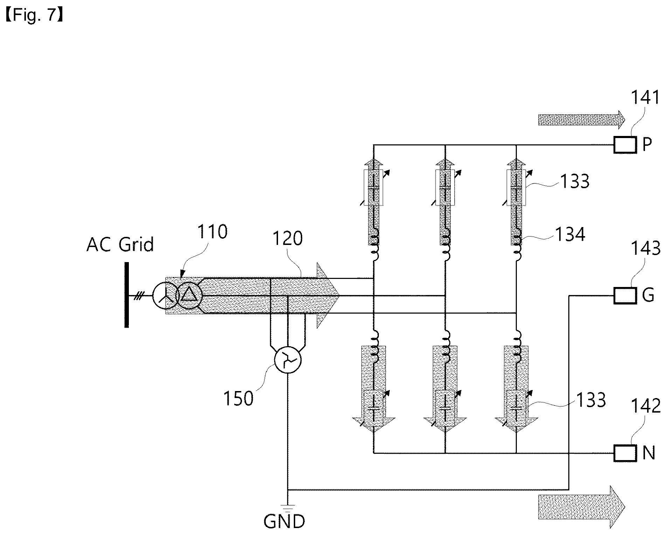

FIG. 6 and FIG. 7 are state views illustrating current flow in the MMC according to another embodiment of the present disclosure.

FIG. 6 is a view illustrating an example in which a positive DC voltage output from the positive terminal 141 is relatively higher than a negative DC voltage output from the negative terminal 142 during the simultaneous operation of the positive terminal 141 and the negative terminal 142 in the MMC 130 according to the present disclosure.

Referring to FIG. 6, by differently controlling switching operations of the switching units 1331 of the submodules 133 of the upper arm 131 and the switching units 1331 of the submodules 133 of the lower arm 132, positive DC power of the positive terminal 141 may be output to be relatively higher than negative DC power of the negative terminal 142.

That is, power output from the first transformer 110 to the power transmission line 120 is transmitted to the positive terminal 141 and the negative terminal 142 according to switching operations of the switching units 1331 of the submodules 133 of the upper arm 131 and the switching units 1331 of the submodules 133 of the lower arm 132.

Here, the switching operations of the switching units 1331 of the submodules 133 of the upper arm 131 and the switching units 1331 of the submodules 133 of the lower arm 132 are controlled differently so that positive DC power output from the positive terminal 141 is relatively higher than negative DC power output from the negative terminal 142.

For example, an on/off duty ratio D1 of the switching units 1331 of the submodules 133 of the upper arm 131 and an on/off duty ratio D2 of the switching units 1331 of the submodules 133 of the lower arm 132 are set to be different such that the on/off duty radio D1 is larger than the on/off duty ratio D2.

In FIG. 6, as an example, power output from the first transformer 110 to the power transmission line 120 may be a sum of power output through the positive terminal 141 and power output through the negative terminal 142.

FIG. 7 is a view illustrating an example in which, contrary to the example in FIG. 6, a negative DC voltage output from the negative terminal 142 is relatively higher than a positive DC voltage output from the positive terminal 141 during the simultaneous operation of the positive terminal 141 and the negative terminal 142 in the MMC 130.

Referring to FIG. 7, by differently controlling switching operations of the switching units 1331 of the submodules 133 of the upper arm 131 and the switching units 1331 of the submodules 133 of the lower arm 132, negative DC power of the negative terminal 142 may be output to be relatively higher than positive DC power of the positive terminal 141.

That is, in order to output negative DC power from the negative terminal 142 to be relatively higher than positive DC power output from the positive terminal 141, the on/off duty ratio D1 of the switching units 1331 of the submodules 133 of the upper arm 131 is set to be smaller than the on/off duty ratio D2 of the switching units 1331 of the submodules 133 of the lower arm 132.

In FIG. 7, as an example, power output from the first transformer 110 to the power transmission line 120 may be a sum of power output through the positive terminal 141 and power output through the negative terminal 142.

As described above, in the HVDC system of the present disclosure, magnitudes of power output from the positive terminal 141 and the negative terminal 142 are capable of being adjusted by controlling the on/off duty ratio D1 and the on/off duty ratio D2.

Meanwhile, in FIG. 3 to FIG. 7, switching operations of the switching units 1331 of the submodules 133 of the upper arm 131 and the switching units 1331 of the submodules 133 of the lower arm 132 may be independently controlled.

That is, the on/off duty ratio D1 of the switching units 1331 of the submodules 133 of the upper arm 131 and the on/off duty ratio D2 of the switching units 1331 of the submodules 133 of the lower arm 132 may be independently controlled.

Accordingly, DC power output through the positive terminal 141 and the negative terminal 142 may be independently controlled.

For example, as illustrated in FIG. 3, DC power having the same magnitude may be output from the positive terminal 141 and the negative terminal 142. Otherwise, as illustrated in FIG. 6 and FIG. 7, DC power having different magnitudes may be output from the positive terminal 141 and the negative terminal 142. In an extreme case, as illustrated in FIG. 4 and FIG. 5, current may be prevented from flowing through any one of the positive terminal 141 and the negative terminal 142 such that DC power is output only from the other terminal.

As described above, in the HVDC system according to the embodiment of the present disclosure, the second transformer 150 is connected to the power transmission line 120 connecting the first transformer 110 and the MMC 130 to each other, and the second transformer 150 is configured as a zig-zag transformer such that the neutral point is formed. The neutral point is connected to ground GND and serves as the ground terminal 143 for the positive terminal 141 and the negative terminal 142, so that that the DC terminal of the MMC 130 has the bipolar structure.

Accordingly, in the HVDC system of the present disclosure, DC power may be output between the positive terminal 141 and the negative terminal 142 in the MMC 130 having the bipolar structure (P-N simultaneous operation), positive DC power may be output between the positive terminal 141 and the ground terminal 143 (P-G operation), and negative DC power may be output between the negative terminal 142 and the ground terminal 143 (N-G operation).

In addition, magnitudes of positive DC power and negative DC power may be adjusted by controlling the on/off duty ratios for the switching operations of the switching units 1331 of the submodules 133 of the upper arm 131 and the lower arm 132 of the MMC 130.

Although embodiments of the present disclosure have been described above with reference to the accompanying drawings, the present disclosure is not limited to the embodiments described above, and may be implemented in various different forms. Furthermore, those skilled in the art to which the present disclosure pertains will understand that the present disclosure may be embodied in other specific forms without departing from the technical spirit or essential characteristics of the present disclosure. Therefore, it should be appreciated that the aforementioned exemplary embodiments are illustrative in all aspects and are not restricted.

## Claims

1. an HVDC system comprising:
a first transformer having a primary side connected to an AC grid side;
a power transmission line connected to a secondary side of the first transformer;
an MMC connected to the secondary side of the first transformer through the power transmission line;
a positive terminal and a negative terminal formed at a DC terminal of the MMC;
a second transformer connected to the power transmission line; and
a ground terminal connected to a neutral point of the second transformer and to a ground (GND),
wherein the DC terminal of the MMC forms a bipolar structure by the positive terminal, the negative terminal, and the ground terminal.

2. The HVDC system of claim 1, wherein the second transformer comprises a zig-zag transformer.

3. The HVDC system of claim 1, wherein the MMC comprises an upper arm and a lower arm, and each of the upper arm and the lower arm comprises a plurality of submodules connected in series.

4. The HVDC system of claim 3, wherein an on/off duty ratio of each switching unit of the submodules of the upper arm and an on/off duty ratio of each switching unit of the submodules of the lower arm are independently adjusted.

5. The HVDC system of claim 1, wherein the neutral point of the second transformer is directly connected to the ground (GND).
